Europäisches Patentamt

European Patent Office

Office européen des brevets

(19)

(11) Numéro de publication: **0 248 965**
A1

(12) **DEMANDE DE BREVET EUROPEEN**

(21) Numéro de dépôt: 86401240.6

(22) Date de dépôt: 09.06.86

(51) Int. Cl.⁴: **G01G 3/14 , G01L 1/22**

(43) Date de publication de la demande:
16.12.87 Bulletin 87/51

(84) Etats contractants désignés:
**AT BE CH DE GB IT LI NL SE**

(71) Demandeur: **ESSELTE MOREAU**
**106 Bis, Avenue Beaurepaire**
**F-94100 Saint Maur(FR)**

(72) Inventeur: **Mishliborsky, Zvy**
**5, rue René Boulanger**
**F-75010 Paris(FR)**

(74) Mandataire: **Rinuy, Santarelli**
**14, avenue de la Grande Armée**
**F-75017 Paris(FR)**

(54) **Capteur de force pour instrument de pesage.**

(57) Un capteur de force (1) comporte un bloc parallélépipédique (2), plus haut que large, qui est évidé dans le sens de la largeur en sorte de former un parallélogramme rendu déformable par la présence de zones (9A à 9D) amincies dans le sens de la hauteur; des éléments sensibles à une déformation par flexion (13A et 13B) sont fixés sur une tranche sensiblement horizontale du bloc, en regard de deux (9A et 9B) des zones amincies, lesquelles présentent une plus grande flexibilité que les autres zones amincies (9C et 9D). Cela permet une grande facilité de fabrication à faible coût, tout en combinant une grande précision de mesure et une faible sensibilité aux charges excentrées.

FIG.1

## "Capteur de force instrument de pesage"

La présente invention concerne un dispositif capteur de force pour appareil de mesure tel qu'un instrument de pesage.

On connaît déjà des dispositifs capteurs de force constitués par un bloc parallélépipédique présentant des évidements définissant des sections amincies de moindre résistance dont on mesure la déformation sous l'action d'une masse à peser avec des éléments adaptés à détecter une déformation tels que des jauges de contrainte.

Les dispositifs capteurs de force du type précité comportent généralement une plage d'appui en porte-à-faux située près d'un coin du bloc sur sa face inférieure et une plage de réception de la force à mesurer située près d'un coin diagonalement opposé à celui précité sur la face supérieure du bloc.

En pratique, à la plage de réception de la force à mesurer est rapporté un plateau sur lequel on place une masse à peser en un endroit quelconque. On comprend que, pour une mesure précise de cette masse, il convient d'éliminer (ou de réduire à un minimum) l'influence parasite de la position de la masse sur le plateau : il convient donc que ces dispositifs soient rendus aussi peu sensibles que possible aux moments de flexion créés par des forces excentrées.

On a proposé à cet effet diverses géométries de blocs dont l'une, proposée dans le brevet FR-2.386.024 ou le brevet EP-O 060 766, donne toute satisfaction. Ces brevets proposent un bloc parallélépipédique dont les dimensions constantes maximale et minimale (respectivement appelées longueur et largeur) sont orientées dans un plan horizontal tandis que la troisième dimension, intermédiaire entre la largeur et la longueur, appelée hauteur, est orientée verticalement. Divers évidements sont ménagés dans le bloc dans le sens de la largeur en sorte de définir un parallélogramme déformable comportant deux montants verticaux reliés par des zones amincies à des traverses horizontales, les deux montants verticaux étant reliés l'un à l'autre, entre les traverses horizontales, par deux poutres horizontales reliées par un élément vertical central de flexion qui peut fléchir perpendiculairement au sens de la largeur. C'est cet élément central qui permet l'élimination des moments de flexion engendrés par les forces excentrées. Une mesure de la charge appliquée est faite par des jauges disposées de part et d'autre d'une zone amincie par laquelle l'une des poutres est reliée au montant correspondant, du côté de la plage d'appui.

Une autre géométrie est proposée par le brevet US-4.432.247 qui propose un bloc dont la plus petite des dimensions (hauteur) est orientée verticalement; ce bloc présente des évidements dans le sens de la largeur ; cette dernière dimension, quoique inférieure à la longueur (également orientée horizontalement), est nettement supérieure à la hauteur. Ces évidements définissent un parallélogramme très aplati comportant deux montants horizontaux massifs reliés par des zones amincies de grande dimension (dans le sens de la largeur) à des plaques supérieure et inférieure. Une mesure de la masse à peser est donnée par des jauges de contraintes fixées au dessus des zones amincies bordant la plaque supérieure de ce bloc qui se comporte donc, dans son ensemble, comme une poutre de flexion. Une certaine insensibilité aux moments de flexion engendrés par les forces excentrées est obtenue du fait de l'importance de la largeur, qui confère au bloc une bonne rigidité dans un plan horizontal.

Il est à noter que la sensibilité d'un capteur de force formé d'un bloc parallélépipédique évidé de l'un quelconque des types précités diminue lorsque sa largeur augmente, d'où il découle que la faible sensibilité aux forces excentrées de la poutre de flexion du brevet US-4.432.247 va de pair avec une faible sensibilité et donc une faible précision sur les mesures.

La présente invention a pour objet un capteur de force du type comportant un bloc parallélépipédique évidé dans le sens de sa largeur, qui présente à la fois une grande sensibilité et donc une grande précision (du fait d'une faible largeur, nettement inférieure à la hauteur dudit bloc), et une très faible sensibilité aux efforts excentrés, avec une géométrie globale qui soit toutefois plus simple et plus aisée à obtenir (à moindre coût) que celles proposées par les documents FR-2.386.024 et même EP-O 060 766 précités.

L'invention propose à cet effet un capteur de force pour instrument de pesage du type comportant un bloc globalement parallélépipédique dont la longueur et la largeur sont mesurées selon des axes horizontaux perpendiculaires et dont la hauteur est mesurée selon un axe vertical, ce bloc étant évidé dans le sens de la largeur en sorte de comporter deux montants verticaux reliés par deux paires de zones amincies à deux poutres horizontales supérieure et inférieure, l'un de ces montants étant destiné à être fixé à un socle et l'autre de ces montants étant destiné à être fixé à un plateau de réception d'une charge à peser, ce capteur comportant en outre des éléments sensibles à une déformation par flexion associées à au moins une zone du bloc amincie dans le sens de la hauteur, ce bloc étant caractérisé en ce que, en combinaison :

-ce bloc se réduit à un parallélogramme déformable comportant un seul évidement central, et sa hauteur, inférieure à sa longueur, est sensiblement supérieure à sa largeur;

-les éléments sensibles à une déformation par flexion sont disposés sur une face horizontale sensiblement plane du bloc en regard de deux zones amincies par lesquelles l'une des poutres horizontales est reliée aux montants verticaux; et

-la flexibilité des zones amincies de la poutre portant lesdits éléments sensibles est supérieure à celle des zones amincies de l'autre des poutres horizontales.

On vérifiera que l'invention propose un ensemble de caractéristiques dont la combinaison n'est ni décrite ni suggérée dans les documents précités. Il est à noter qu'il est déjà connu, de par des documents tels que la demande de brevet EP-0 107 966 A, d'utiliser, dans un capteur de force pour pesage, un bloc présentant un évidement central, mais ces documents proposent à chaque fois de respecter une grande symétrie dans la géométrie du bloc, avec des jauges de contrainte associées à chaque zone amincie, les diverses zones amincies présentant une même flexibilité. L'invention propose par contre de renoncer à la symétrie que préconise, en fait, la quasi-totalité des dispositifs connus, en ce qui concerne à la fois la disposition des organes de détection de déformation, la géométrie et les caractéristiques mécaniques des diverses zones amincies.

Dans le cas où les poutres supérieure et inférieure sont dans un même matériau, cette différence de flexibilité peut être obtenue par une différence (en sens inverse) entre les épaisseurs des zones amincies des deux poutres. Cette différence de flexibilité peut également être obtenue grâce à des différences adéquates entre les largeurs ou les caractéristiques mécaniques des zones amincies (voire des poutres dans lesquelles elles sont définies).

Les éléments ou organes sensiblement sont de préférence portés par la poutre supérieure.

Dans un mode préféré de l'invention les organes sensibles à une déformation par flexion sont flexibles et font de préférence partie d'un circuit souple, adapté à suivre les déformations de la poutre supérieure du bloc, constitué par exemple par un circuit imprimé. Les organes sensibles précités sont avantageusement rapportés directement sur la face supérieure du bloc, par collage par exemple, ou lui sont reliés au travers d'une couche souple de support ; ils peuvent être obtenus sur ce bloc par toute autre technique connue.

Dans un but de simplicité d'usinage, l'évidement central du bloc est avantageusement formé d'un alésage cylindrique central raccordant quatre alésages cylindriques plus petits bordant les zones amincies et disposés en rectangle. On sait en effet que le percage de trous est une technique d'usinage qui est particulièrement bon marché. En fait, seule la géométrie des zones amincies est importante, surtout celles de la poutre supérieure, aussi le reste de l'évidement central peut-il être obtenu avec des tolérances tout à fait moyennes.

Selon une disposition avantageuse de l'invention le bloc parallélépipédique est en deux parties, avantageusement en deux matériaux, une partie lame de flexion portant les éléments sensibles, et un bâti en U. Cette disposition en deux parties, d'une part facilite la fabrication du bloc (par découpe par exemple de deux bâtis en U disposés tête-bêche dans une plaque, avec une perte de métal moindre que dans le cas d'un bloc en une pièce) et, d'autre part, facilite la fixation autour des éléments sensibles, d'un manchon d'isolation étanche tel qu'un soufflet métallique. Cette disposition a pour autre avantage de permettre, sur un même bâti, le montage d'une pluralité de lames de flexion à performance diverses, tandis qu'une telle lame peut même être utilisée, dans certaines applications, toute seule sans être rapportée à un bâti en U ou, au contraire, être montée, au choix, sur une pluralité de bâtis en U de caractéristiques mécaniques et de compositions différentes.

Une telle structure en deux parties du bloc parallélépipédique permet, par l'association de matériaux différents pour les deux parties, ou par le choix de deux largeurs différentes, d'obtenir la différence de flexibilité visée par l'invention, même en utilisant des zones amincies de même épaisseur.

Des objets, caractéristiques et avantages de l'invention ressortent de la description qui suit, donnée à titre d'exemples non limitatifs, en regard des dessins annexés sur lesquels :

-la figure 1 est une vue latérale en élévation d'un capteur de force selon l'invention;

-la figure 2 en est une vue du dessus, à plus grande échelle;

-la figure 3 est une vue latérale en élévation d'un capteur de force selon une variante de réalisation du capteur de la figure 1;

-la figure 4 est une vue en perspective d'un capteur de force selon l'invention conformément à un autre mode de réalisation, et

-la figure 5 est une vue en élévation d'un exemple d'application du capteur de force de la figure 4.

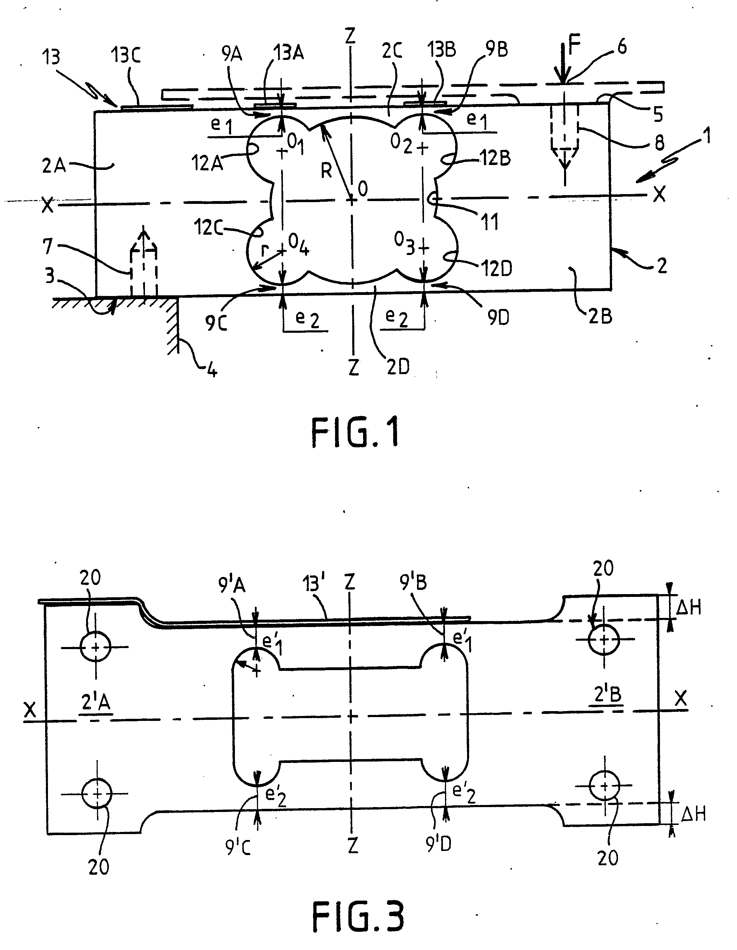

La figure 1 représente à titre d'exemple un capteur de force (1) comportant un bloc homogène sensiblement parallélépipédique (2) présentant une portée d'appui (3) pour sa fixation à un socle représenté en (4) et, diagonalement opposée, une portée de réception (5) adaptée à être soumise à une force à mesurer.

En pratique cette portée de réception est adaptée à recevoir pour fixation un plateau représenté en tiretés sous la référence (6) et qui est destiné à supporter une masse à peser. Le bloc (2) présente des taraudages (7 et 8) destinés à coopérer avec des organes de fixation non représentés, tels que des vis, pour son assujettissement au socle (4) et au plateau (6).

Ce bloc présente sa plus grande dimension, appelée longueur (L), suivant un axe horizontal X-X, et présente sa plus petite dimension, appelée largeur, suivant un axe horizontal Y-Y perpendiculaire au plan de la figure 1. Ce bloc présente, suivant un axe vertical Z-Z, parallèle au sens de la force à mesurer (F), une dimension appelée hauteur qui est inférieure à la longueur et sensiblement supérieure à la largeur.

Le bloc (2) est évidé dans le sens de sa largeur, perpendiculairement aux axes X-X et Z-Z, en sorte de comporter un premier montant vertical (2A) à l'aplomb de la plage d'appui (3), un second montant vertical (2B) sous la plage de réception (5) et deux poutres horizontales (2C) et (2D) respectivement supérieure et inférieure, reliées à ces montants par des zones amincies (9A) et (9B), (9C), et (9D). L'épaisseur $e_1$ des zones amincies (9A) et (9B) bordant la poutre supérieure (2C), mesurée suivant l'axe Z-Z, est inférieure à l'épaisseur $e_2$ des zones amincies (9C) et (9D) bordant la poutre inférieure (2D) ; la flexibilité des zones (9A) et (9B) est donc supérieure à celle des zones amincies (9C) et (9D).

De façon avantageuse, l'évidement central du bloc (2) est constitué d'un alésage cylindrique central (11) de rayon (R) et de centre (0), raccordant quatre alésages cylindriques (12A à 12D) de plus petit rayon (r), définissant chacun l'une des zones amincies, et centrés selon les coins d'un rectangle $0_1$-$0_2$-$0_3$-$0_4$ à côtés parallèles aux axes X-X et Z-Z.

A titre d'exemple, dans un bloc 110 x 40 x 20 (en millimètres) R vaut 17,5 mm, r vaut 7,5 mm. et les épaisseurs des zones amincies sont respectivement $e_1$ = 2,5 mm et $e_2$ = 3,5 mm, et les zones amincies sont espacées de 30 mm parallèlement à l'axe X-X (distance entre $0_1$ et $0_2$, ou $0_3$ et $0_4$).

Il s'est avéré que pour obtenir une bonne précision, il était souhaitable que la somme $e_1$ + $e_2$ soit supérieure à une valeur minimale (de 1,8 mm. par exemple dans le cas précité) et que, en vue d'une faible sensibilité aux charges excentrées, il était avantageux que la différence $e_2$-$e_1$ soit supérieure à une valeur minimale non nulle (de 0,6 mm. par exemple dans le cas considéré).

Sur la face supérieure du bloc (2) sont disposés, en regard des zones amincies (9A) et (9B) de flexibilité maximale, des éléments sensibles (13A) et (13B), sensibles à une déformation par flexion de ces zones. Ces éléments sensibles sont connectés au sein d'un circuit souple (13) comportant une partie résiduelle (13C) au dessus du montant vertical (2A), c'est-à-dire en une zone neutre du point de vue contrainte ou déformation.

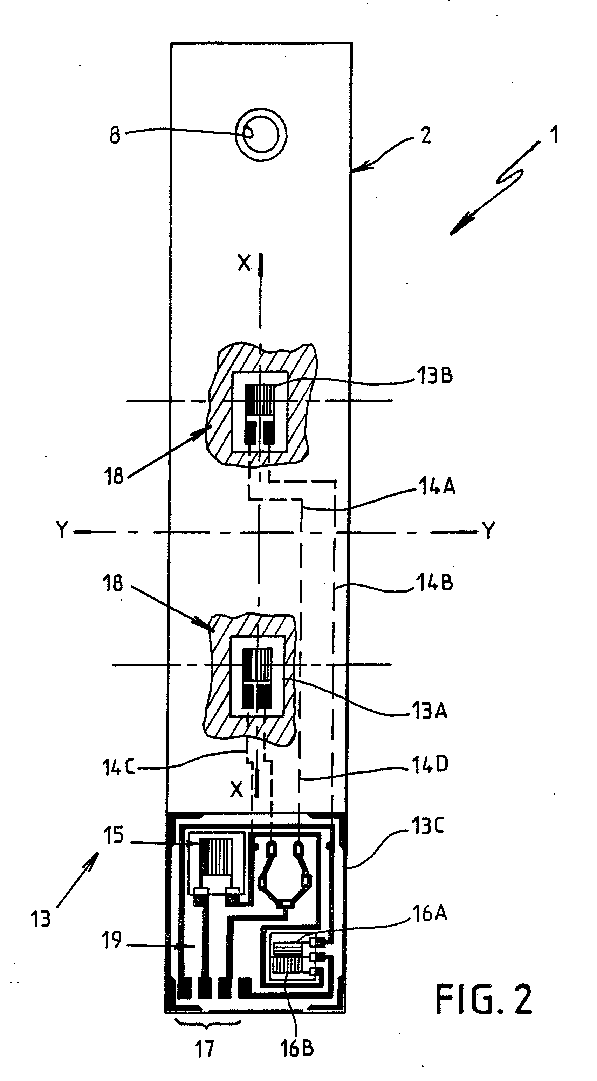

Le détail de ce circuit souple (13) apparaît à la figure 2 qui montre la tranche supérieure du bloc (2).

On notera que selon une disposition avantageuse de l'invention, les éléments sensibles et le reste du circuit (13) sont rapportés sur une surface très étroite.

Le circuit (13) de la figure 2 comporte des éléments sensibles (13A) et (13B) constitués par des jauges de contrainte qui sont reliées par des fils étamés (14A) (14B), (14C) et (14D) au circuit partiel (13C) comportant une grille (15) de compensation de la dérive de la sensibilité en température, et des jauges inactives (16A) et (16B). Ce circuit comporte des bornes de sortie (17).

En variante non représentée, les jauges inactives sont fixées sur une face verticale du bloc.

Le circuit souple (13) est obtenu par collage direct des jauges actives (13A) et (13B) sur les zones amincies (9a) et (9B), (des zones de colle apparaissent en (18) à la figure 2), par collage d'un support de circuit (19) (circuit imprimé) comportant des lignes conductrices puis par collage sur ce support de la grille (15) et des jauges inactives (16A) et (16B). Ces collages sont en pratique suivis d'un passage en étuve pour consolider thermiquement et sous pression la fixation de ces éléments.

En variante non représentée, la partie résiduelle (13C) du circuit (13) est localisée entre les éléments sensibles (13A) et (13B) (il s'agit par exemple d'une couche de polymide, ou de résine époxyde, d'une épaisseur d'environ 10 microns). Selon une autre variante encore, les portions (13A), (13B) et (13C) font partie d'un même circuit continu.

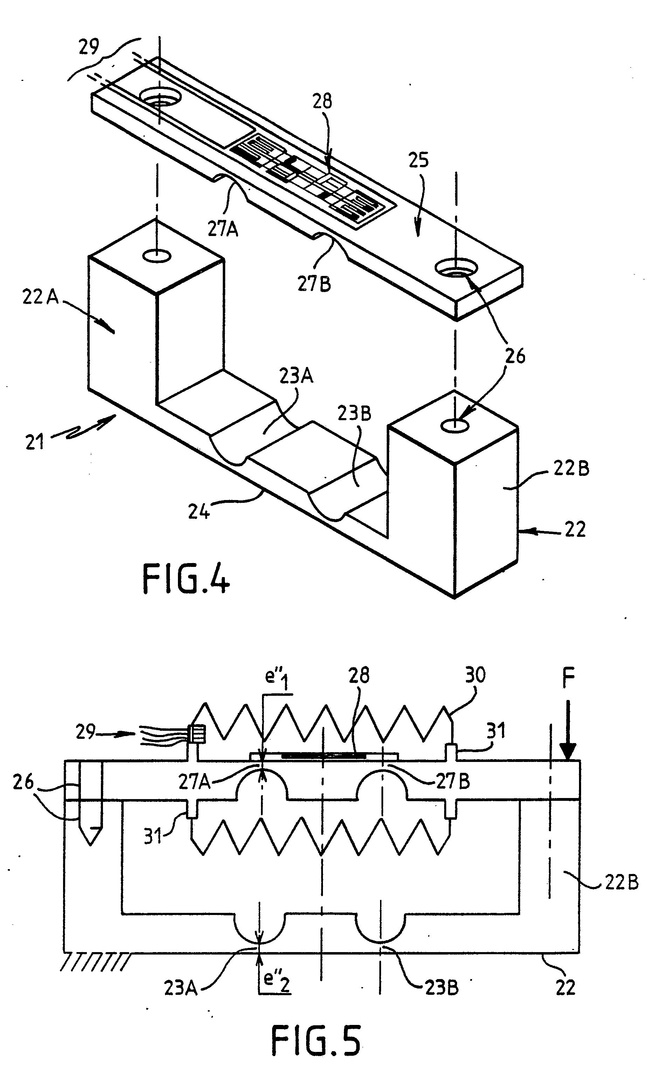

La figure 3 montre une variante de la figure 1 dans laquelle les montants verticaux (2'A) et (2'B) du bloc (2') présentent une augmentation de hauteur (2ΔH) par rapport au reste du bloc (ce qui peut permettre une fixation plus aisée à un socle et à un plateau) et où les zones amincies (9'A), (9'B), (9'C) et (9'D) sont déterminées par de petits alésages raccordés par un évidement central rectangulaire. Le bloc (2') présente en outre des perçages (20) dans le sens de la largeur, dans les montants verticaux, par lesquels ces montants peuvent être fixés audit socle ou audit plateau. Le circuit souple (13') est continu et se prolonge jusqu'au coin supérieur gauche du bloc.

Selon une disposition avantageuse de l'invention, le bloc parallélépipédique d'un capteur de force selon l'invention est en deux parties, éventuellement obtenues selon des processus de fabrication parallèles mais distincts, en des matériaux qui peuvent être différents (métal et/ou plastique, résine ......).

La figure 4 illustre un bloc (21) comportant un bâti en U (22) comportant des montants verticaux (22A) et (22B) reliés à leurs bases, par des zones amincies (23A) et (23B), à une poutre horizontale (24), ainsi qu'une lame de flexion (25) adaptée à être rapportée à la partie supérieure du bâti (22), par des vis exemple à la faveur de perçages et taraudages (26) ménagés aux extrémités de ladite lame et à la partie supérieure des montants (22A) et (22B). Sur cette lame de flexion (25) est rapporté un circuit continu (28) s'étendant continûment au dessus et entre les zones amincies (27A) et (27B). A ce circuit (28) sont associés des fils de sortie (29).

La figure 5 représente un montage qui fait ressortir un avantage d'une constitution du bloc (21) en deux parties. Sur cette figure la lame de flexion (25) est effectivement fixée au bâti (22) en U; ce bâti est rapporté à un socle (4) et une extrémité diagonalement opposée de la lame de flexion constitue une plage de réception d'une force (F) à mesurer.

De manière avantageuse des moyens de fixation (non représentés) assurent à la fois l'assujettissement d'un plateau de réception d'une charge à peser et de cette lame de flexion et au montant (22B) du bâti.

Le circuit (28) rapporté sur la face supérieure de la lame de flexion (25) est disposé en totalité à l'intérieur d'une enceinte étanche constituée d'un manchon d'isolation étanche, ici constitué par un soufflet métallique (30) adapté à suivre les flexions de cette barre de flexion; la fixation de ce soufflet est facilitée par la présence d'épaulements (31) en saillie verticale. Le montage du soufflet (30) est rendu possible, sans soudure longitudinale suivant l'axe X-X par le caractère amovible de la lame (25) vis-à-vis du reste du bloc (21).

La flexibilité des zones amincies 27A et 27B est supérieure à celle des zones amincies 23A et 23B. Cette différence peut être obtenue comme précédemment en choisissant e''$_1$ inférieur à e''$_2$ ; en profitant de la constitution du bloc en deux parties, on peut aussi prendre une lame de flexion de moinddre largeur que le bâti en U, ou étant constitué d'un matériau plus flexible ; on peut également envisager pour les diverses zones amincies des différences, à la fois, dans leur hauteur, leur largeur (voire leur longeur, avec des rayons de courbure différents) et leur matériau constitutif.

Il va de soi que la description qui précède n'a été donnée qu'à titre indicatif non limitatif et que de nombreuses variantes pourront être proposées par l'homme de l'art sans sortir du cadre de l'invention, notamment par combinaison des dispositions avantageuses précitées : les blocs des figures 1 et 3 peuvent ainsi être réalisés en deux parties et la forme de l'évidement central se prête à de nombreuses variantes.

Les zones amincies de flexibilité maximale peuvent être disposées à la partie basse du bloc ; les lames de flexion peuvent constituer la poutre inférieure d'un bloc selon l'invention.

On peut noter que, selon différentes dispositions préférées de l'invention, communes aux modes de réalisation représentés :

-l'évidement central est symétrique par rapport à un plan horizontal parallèle aux axes X-X et Y-Y,

-l'évidement central est symétrique par rapport à un plan vertical transversal contenant les axes Y-Y et Z-Z ou parallèle à ceux-ci,

-les zones amincies disposées respectivement sur les poutres supérieure et inférieure en regard l'une de l'autre sont centrés par rapport à deux plans parallèles,

-ces zones amincies sont avantageusement délimitées par des alésages transversaux dont les axes sont inclus deux à deux dans des plans parallèles, et

-les jauges de contraintes sont disposées de façon symétrique par rapport aux zones amincies associées, parallèlement à l'axe X-X.

## Revendications

1. Capteur de force pour instrument de pesage du genre comportant un bloc globalement parallélépipédique dont la longueur et la largeur sont mesurées selon des axes horizontaux perpendiculaires et dont la hauteur est mesurée selon un axe vertical, ce bloc étant évidé dans le sens de la largeur en sortie de comporter deux montants verticaux reliés par deux paires de zones amincies à deux poutres horizontales supérieure et inférieure, l'un de ces montants étant destiné à être fixé à un socle et l'autre de ces montants étant destiné à être fixé à un plateau de réception d'une charge à peser, ce capteur, comportant en outre des éléments sensibles à une déformation par flexion associés à au moins une zone du bloc amincie dans le sens de la hauteur, étant caractérisé en ce que, en combinaison :

le bloc (22 ; 21) ‾ est un parallélogramme déformable comportant un seul évidement central, et sa hauteur, inférieure à sa longueur, est sensiblement supérieure à sa largeur;

-les éléments sensibles à une déformation par flexion (13A, 13B, 28) sont disposés sur une face horizontale sensiblement plane du bloc en regard de deux zones amincies (9A, 9B, 27A, 27B) par lesquelles l'une des poutres horizontales (2C, 2D, 24, 25) est reliée aux montants verticaux (2A, 2B); et

-la flexibilité des zones amincies de la poutre (2C, 25) portant lesdits éléments sensibles est supérieure à celle des zones amincies de l'autre des poutres horizontales (2D, 24).

2. Capteur de force selon la revendication 1, caractérisé en ce que les éléments sensibles sont portés par la poutre horizontale supérieure (2C, 25).

3. Capteur de force selon la revendication 1 ou la revendication 2, caractérisé en ce que lesdits éléments sensibles à une déformation par flexion (13A, 13B,28) font partie d'un circuit électronique souple (13,28) rapporté sur la face supérieure du bloc.

4. Capteur de force selon la revendication 3, caractérisé en ce que ledit circuit souple (13) comporte deux jauges de contraintes actives (13A, 13B) en regard desdites zones amincies et deux jauges de contraintes inactives (16A, 16B) connectées aux premières en sorte de former un pont de Wheatstone et disposées en regard d'une zone de la surface supérieure du bloc où la déformation est nulle, ainsi qu'une grille (15) de compensation de la dérive de la sensibilité avec la température sur une branche de l'alimentation.

5. Capteur selon l'une quelconque des revendications 1 à 4, caractérisé en ce que l'évidement définissant les deux paires de zones amincies (9A, 9D) est formé d'un alésage cylindrique principal (11) raccordant quatre alésages cylindriques (12A, 12D) disposés en rectangle bordant lesdites zones amincies.

6. Capteur selon l'une quelconque des revendications 1 à 4, caractérisé en ce que ledit bloc parallélépipédique (21) se compose d'une lame de flexion (25), comportant la poutre portant lesdits éléments sensibles (28) et une partie de chacun des montants verticaux, rapportée de façon amovible au reste du bloc formant un bâti en U (22).

7. Capteur selon la revendication 6, caractérisé en ce que la lame de flexion (25) et le bâti en U (22) sont obtenus en des matériaux différents.

8. Capteur selon la revendication 6 ou la revendication 7, caractérisé en ce que la lame de flexion (25) traverse un manchon déformable (30) adapté à isoler les deux zones amincies (27A, 27B) de cette lame vis-à-vis de l'extérieur de manière étanche.

9. Capteur selon l'une quelconque des revendications 6 à 8, caractérisé en ce que la lame de flexion a une largeur inférieure à celle du bâti en U.

10. Capteur selon l'une quelconque des revendications 1 à 9, caractérisé en ce que l'épaisseur des zones amincies de flexibilité maximale est inférieure à celle des autres zones amincies.

11. Capteur selon l'une quelconque des revendications 1 à 10, caractérisé en ce que l'évidement central est symétrique par rapport à un plan horizontal.

12. Capteur selon l'une quelconque des revendications 1 à 11, caractérisé en ce que l'évidement central est symétrique par rapport à un plan vertical transversal.

13. Capteur selon l'une quelconque des revendications 1 à 12, caractérisé en ce que les zones amincies disposées respectivement sur les poutres supérieure et inférieure en regard l'une de l'autre sont centrées par rapport à deux plans parallèles.

14. Capteur selon l'une quelconque des revendications 1 à 13, caractérisé en ce que les zones amincies sont délimitées par des alésages transversaux dont les axes sont inclus deux à deux dans des plans parallèles.

15. Capteur selon l'une quelconque des revendications 1 à 14, caractérisé en ce que les jauges de contraintes sont disposées de façon symétrique par rapport aux zones amincies associées, parallèlement à l'axe des longueurs (X-X).

**FIG.1**

**FIG.3**

FIG. 2

FIG.4

FIG.5

## RAPPORT DE RECHERCHE EUROPEENNE

Office européen
des brevets

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 509 465 (DAL DAN)<br><br>* Page 2, ligne 22 - page 3, ligne 9; revendications 1,2; figures 1,2 * | 1,2,10 ,12,15 | G 01 G 3/14<br>G 01 L 1/22 |
| Y | | 3,11 | |
| D,Y | EP-A-0 053 337 (TOKYO ELECTRIC CO. LTD.)<br>* Page 10, ligne 34 - page 12, ligne 13; revendication 1; figures 8,9 * | 3,11 | |
| A | | 4,12, 15 | |
| E | FR-A-2 581 758 (R.M.S. INGENIERIE ET FINANCIERE)<br>*. En entier * | 1-15 | |
| A | CH-A- 353 555 (MALCOLM GREEN)<br><br>* Page 2, ligne 69 - page 3, ligne 2; page 3, lignes 19-76; figures 1-4,6 *<br><br>--- -/- | 1,10, 11 | |

**DOMAINES TECHNIQUES RECHERCHES (Int. Cl.4)**

G 01 G
G 01 L
G 01 B

Le present rapport de recherche a été etabli pour toutes les revendications

| Lieu de la recherche | Date d'achevement de la recherche | Examinateur |
|---|---|---|
| LA HAYE | 04-02-1987 | ROSE A.R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T theorie ou principe à la base de l'invention
E : document de brevet anterieur, mais publie a la date de dépôt ou après cette date
D : cité dans la demande
L : cité pour d'autres raisons

& : membre de la même famille, document correspondant

OEB Form 1503 03 82

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 094 290 (TESTUT-AEQUITAS) * Page 4, ligne 29 - page 5, ligne 2; page 12, lignes 4-8; revendications 1,5; figures 1,2,6,7 * | 1,5,11 -14 | |
| | --- | | |
| A | FR-A-2 505 496 (TOUX) * Page 6, lignes 14-30; revendications 1,9; figures 1,7 * | 1,8,11 ,12,15 | |
| | ----- | | |
| | | | DOMAINES TECHNIQUES RECHERCHES (Int. Cl.4) |

Le présent rapport de recherche a été etabli pour toutes les revendications

| Lieu de la recherche | Date d achèvement de la recherche | Examinateur |
|---|---|---|
| LA HAYE | 04-02-1987 | ROSE A.R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe à la base de l invention
E . document de brevet anterieur, mais publié a la date de dépôt ou apres cette date
D : cité dans la demande
L : cité pour d'autres raisons

& : membre de la même famille, document correspondant

OEB Form 1503 03 82